(19) Europäisches Patentamt
European Patent Office
Office européen des brevets

(11) Veröffentlichungsnummer: **0 289 927**
**A2**

(12) **EUROPÄISCHE PATENTANMELDUNG**

(21) Anmeldenummer: **88106713.6**

(51) Int. Cl.4: **A01N 37/26 , C07C 131/00**

(22) Anmeldetag: **27.04.88**

(30) Priorität: **08.05.87 DE 3715248**

(43) Veröffentlichungstag der Anmeldung:
**09.11.88 Patentblatt 88/45**

(84) Benannte Vertragsstaaten:
**BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Jelich, Klaus, Dr.**
**Pahlkestrasse 5**
**D-5600 Wuppertal 1(DE)**
Erfinder: **Gayer, Herbert, Dr.**
**Alfred-Delp-Strasse 4**
**D-4019 Monheim(DE)**
Erfinder: **Krämer, Wolfgang, Dr.**
**Rosenkranz 25**
**D-5093 Burscheid 2(DE)**
Erfinder: **Santel, Hans-Joachim, Dr.**
**Grünstrasse 9a**
**D-5090 Leverkusen 1(DE)**
Erfinder: **Schmidt, Robert R., Dr.**
**Im Waldwinkel 110**
**D-5060 Bergisch Gladbach 2(DE)**
Erfinder: **Strang, Harry, Dr.**
**Unterdorfstrasse 6A**
**D-4000 Düsseldorf 31(DE)**

(54) **Herbizide Mittel.**

(57) Die Erfindung betrifft die Verwendung von Alkoximinoalkylamiden der Formel (I),

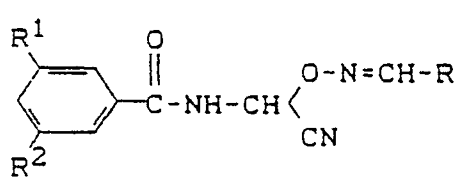

(I)

in welcher
R für Wasserstoff oder Alkyl steht,
$R^1$ für Wasserstoff, Halogen, Cyano, Nitro, Alkyl, Alkoxy, Alkylthio, Halogenalkyl, Halogenalkoxy, Halogenalkylthio, Phenyl, Phenoxy, Formyl, Alkoxycarbonyl, Alkanoyl oder Alkoximinoalkyl steht und
$R^2$ für Halogen, Cyano, Nitro, Alkyl, Alkoxy, Alkylthio, Halogenalkyl, Halogenalkoxy, Halogenalkylthio, Phenyl, Phenoxy, Formyl, Alkoxycarbonyl, Alkanoyl oder Alkoximinoalkyl steht,
als Herbizide.

EP 0 289 927 A2

## Herbizide Mittel

Die Erfindung betrifft die Verwendung von Alkoximinoalkylamiden als Herbizide.

Es ist bereits bekannt, daß bestimmte substituierte Amide, wie beispielsweise das 2-(4-Chlorbenzoylamino)-2-ethoxy-acetonitril herbizide und fungizide Eigenschaften besitzen (vgl. z.B. EP 59 536).

Die herbizide Wirksamkeit dieser vorbekannten Verbindungen gegenüber Problemunkräutern ist jedoch insbesondere bei niedrigen Aufwandmengen und Konzentrationen nicht in allen Anwendungsbereichen völlig zufriedenstellend.

Es wurde gefunden, daß Alkoximinoalkylamide der allgemeinen Formel (I),

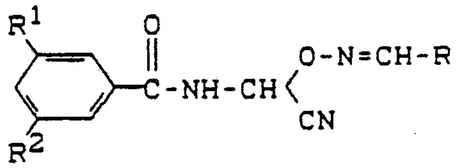

(I)

in welcher

R für Wasserstoff oder Alkyl steht,

$R^1$ für Wasserstoff, Halogen, Cyano, Nitro, Alkyl, Alkoxy, Alkylthio, Halogenalkyl, Halogenalkoxy, Halogenalkylthio, Phenyl, Phenoxy, Formyl, Alkoxycarbonyl, Alkanoyl oder Alkoximinoalkyl steht und

$R^2$ für Halogen, Cyano, Nitro, Alkyl, Alkoxy, Alkylthio, Halogenalkyl, Halogenalkoxy, Halogenalkylthio, Phenyl, Phenoxy, Formyl, Alkoxycarbonyl, Alkanoyl oder Alkoximinoalkyl steht,

herbizide Eigenschaften besitzen.

Die Verbindungen der Formel (I) können als geometrische Isomere oder Isomerengemische unterschiedlicher Zusammensetzung vorliegen. Sowohl die Verwendung der reinen Isomeren als auch die der Isomerengemische werden erfindungsgemäß beansprucht.

Überraschenderweise zeigen die erfindungsgemäß verwendbaren Alkoximinoalkylamide der allgemeinen Formel (I) erheblich bessere herbizide Eigenschaften als die aus dem Stand der Technik bekannten substituierten Amide wie beispielsweise das 2-(4-Chlorbenzoylamino)-2-ethoxyacetonitril, welche chemisch und wirkungsmäßig naheliegende Verbindungen sind.

Die erfindungsgemäß verwendbaren Alkoximinoalkylamide sind durch die Formel (I) allgemein definiert.

Bevorzugt verwendbar sind Verbindungen der Formel (I), bei welchen

R für Wasserstoff oder für geradkettiges oder verzweigtes Alkyl mit 1 bis 4 Kohlenstoffatomen steht,

$R^1$ für Wasserstoff, Fluor, Chlor, Brom, Iod, Cyano, Nitro, für jeweils geradkettiges oder verzweigtes Alkyl, Alkoxy oder Alkylthio mit jeweils 1 bis 4 Kohlenstoffatomen, für jeweils geradkettiges oder verzweigtes Halogenalkyl, Halogenalkoxy oder Halogenalkylthio mit jeweils 1 bis 4 Kohlenstoffatomen und 1 bis 9 gleichen oder verschiedenen Halogenatomen, für Phenyl, Phenoxy, Formyl, für Alkanoyl mit 1 bis 5 Kohlenstoffatomen, für Alkoxycarbonyl mit 1 bis 5 Kohlenstoffatomen oder für Alkoximinoalkyl mit jeweils 1 bis 5 Kohlenstoffatomen in den einzelnen Alkylteilen steht und

$R^2$ für Fluor, Chlor, Brom, Iod, Cyano, Nitro, für jeweils geradkettiges oder verzweigtes Alkyl, Alkoxy oder Alkylthio mit jeweils 1 bis 4 Kohlen stoffatomen, für jeweils geradkettiges oder verzweigtes Halogenalkyl, Halogenalkoxy oder Halogenalkylthio mit jeweils 1 bis 4 Kohlenstoffatomen und 1 bis 9 gleichen oder verschiedenen Halogenatomen, für Phenyl, Phenoxy, Formyl, für Alkanoyl mit 1 bis 5 Kohlenstoffatomen, für Alkoxycarbonyl mit 1 bis 5 Kohlenstoffatomen oder für Alkoximinoalkyl mit jeweils 1 bis 5 Kohlenstoffatomen in den einzelnen Alkylteilen steht.

Besonders bevorzugt verwendbar sind Verbindungen der Formel (I), bei welchen

R für Wasserstoff, Methyl, Ethyl, n-oder i-Propyl oder t-Butyl steht,

$R^1$ für Wasserstoff, Fluor, Chlor, Brom, Iod, Cyano, Nitro, Methyl, Ethyl, n-oder i-Propyl, n-, i-, s-oder t-Butyl, Methoxy, Ethoxy, Methylthio, Trifluormethyl, Trifluormethoxy, Trifluormethylthio, Phenyl, Phenoxy, Formyl, Acetyl, Methoxycarbonyl, Ethoxycarbonyl, Methoximinomethyl, Methoximinoethyl oder Ethoximinomethyl steht und

$R^2$ für Fluor, Chlor, Brom, Iod, Cyano, Nitro, Methyl, Ethyl, n-oder i-Propyl, n-, i-, s-oder t-Butyl, Methoxy, Ethoxy, Methylthio, Trifluormethyl, Trifluormethoxy, Trifluormethylthio, Phenyl, Phenoxy, Formyl, Acetyl, Methoxycarbonyl, Ethoxycarbonyl, Methoximinomethyl, Methoximinoethyl und Ethoximinomethyl steht.

Ganz besonders bevorzugt verwendbar sind Verbindungen der Formel (I), bei welchen

R für Wasserstoff, Methyl, Ethyl oder t-Butyl steht,

$R^1$ für Wasserstoff, Fluor, Chlor, Brom, Cyano, Nitro, Methyl, Ethyl, Methoxy, Trifluormethyl, Phenyl, Phenoxy, Methoxycarbonyl, Methoximinomethyl oder Methoximinoethyl steht und

$R^2$ für Fluor, Chlor, Brom, Cyano, Nitro, Methyl, Ethyl, Methoxy, Trifluormethyl, Trifluormethoxy, Trifluormethylthio, Phenyl, Phenoxy, Methoxycarbonyl, Methoximinomethyl oder Methoximinoethyl steht.

Im einzelnen seien außer den bei den Herstellungsbeispielen genannten Verbindungen die folgenden Alkoximinoalkylamide der allgemeinen Formel (I) genannt:

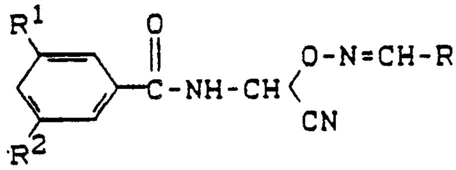

(I)

| R | $R^1$ | $R^2$ |
|---|---|---|
| H | Br | Br |
| H | Cl | Cl |
| $CH_3$ | Cl | Cl |
| H | F | F |
| $CH_3$ | Br | Br |
| H | H | Cl |
| $CH_3$ | H | Cl |
| $CH_3$ | F | F |
| $CH_3$ | $CH_3$ | $CH_3$ |
| H | H | $CH_3$ |
| H | $CH_3$ | $CH_3$ |
| H | H | CN |
| $CH_3$ | H | CN |
| $CH_3$ | H | $NO_2$ |

| R | $R^1$ | $R^2$ |
|---|---|---|
| H | H | $NO_2$ |
| $CH_3$ | $NO_2$ | $NO_2$ |
| H | $CF_3$ | $CF_3$ |
| $CH_3$ | $CF_3$ | $CF_3$ |
| H | H | $SCF_3$ |
| $CH_3$ | H | $SCF_3$ |
| H | H | $OCF_3$ |
| $CH_3$ | H | $OCF_3$ |

Die erfindungsgemäß verwendbaren Alkoximinoalkylamide der Formel (I) sind noch nicht bekannt. Sie sind jedoch Gegenstand einer eigenen vorgängigen noch nicht publizierten Patentanmeldung (vgl. Deutsche Patentanmeldung P 3 627 072 vom 09.08.1986).

Man erhält sie, wenn man bromsubstituierte Amide der Formel (II),

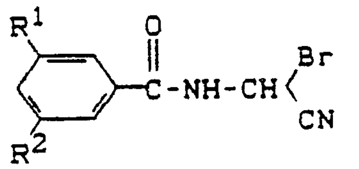

(II)

in welcher

$R^1$ und $R^2$ die oben angegebene Bedeutung haben,

mit Oximen der Formel (III),

HO-N = CH-R (III)

in welcher

R die oben angegebene Bedeutung hat,

gegebenenfalls in Gegenwart eines Verdünnungsmittels und gegebenenfalls in Gegenwart eines Säurebindemittels umsetzt.

Verwendet man beispielsweise 2-(3-Chlorbenzoylamino)-2-bromacetonitril und Acetaldehydoxim als Ausgangsstoffe, so läßt sich der Reaktionsablauf des Herstellungsverfahrens durch das folgende Formelschema darstellen:

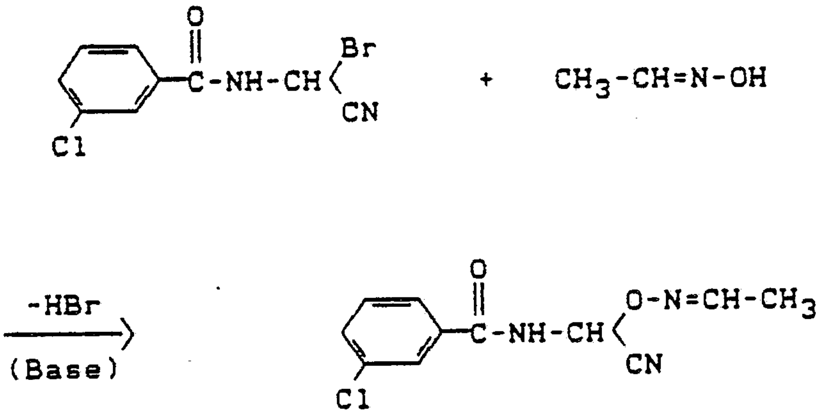


Die zur Durchführung des Herstellungsverfahrens als Ausgangsstoffe benötigten bromsubstituierten Amide sind durch die Formel (II) allgemein definiert. In dieser Formel (II) stehen $R^1$ und $R^2$ vorzugsweise für diejenigen Reste, die bereits im Zusammenhang mit der Beschreibung der erfindungsgemäß verwendbaren Stoffe der Formel (I) als bevorzugt für diese Substituenten genannt wurden. Die bromsubstituierten Amide der Formel (II) sind bekannt (vgl. Z.B. EP 59 536 oder EP 135 304).

Die zur Durchführung des Herstellungsverfahrens weiterhin als Ausgangsstoffe benötigten Oxime sind durch die Formel (III) allgemein definiert. In dieser Formel (III) steht R vorzugsweise für diejenigen Reste, die bereits im Zusammenhang mit der Beschreibung der erfindungsgemäß verwendbaren Stoffe der Formel (I) als bevorzugt für diesen Substituenten genannt wurden.
Die Oxime der Formel (III) sind allgemein bekannte Verbindungen der organischen Chemie.

Als Verdünnungsmittel zur Durchführung des Herstellungsverfahrens kommen inerte organische Lösungsmittel infrage.
Hierzu gehören insbesondere aliphatische, alicyclische oder aromatische, gegebenenfalls halogenierte Kohlenwasserstoffe, wie beispielsweise Benzin, Benzol, Toluol, Xylol, Chlorbenzol, Petrolether, Hexan, Cyclohexan, Dichlormethan, Chloroform, Tetrachlorkohlenstoff, Ether, wie Diethylether, Dioxan, Tetrahydrofuran oder Ethylenglykoldimethyl-oder -diethylether, Ketone, wie Aceton oder Butanon, Nitrile, wie Acetonitril oder Propionitril, Amide, wie Dimethylformamid, Dimethylacetamid, N-Methylformanilid, N-Methylpyrrolidon oder Hexamethylphosphorsäuretriamid, Ester, wie Essigsäureethylester oder Sulfoxide, wie Dimethylsulfoxid.

Das Herstellungsverfahren wird vorzugsweise in Gegenwart eines geeigneten Säurebindemittels durchgeführt. Hierzu gehören vorzugsweise tertiäre Amine, wie Triethylamin, N,N-Dimethylanilin, Pyridin, N,N-Dimethylaminopyridin, Diazabicyclooctan (DABCO), Diazabicyclononen (DBN) oder Diazabicycloundecen (DBU) oder Alkalialkoholate wie Natriummethylat oder Natriumethylat.

Die Reaktionstemperaturen können bei der Durchführung des Herstellungsverfahrens in einem größeren Bereich variiert werden. Im allgemeinen arbeitet man bei Temperaturen zwischen -50° C und +100° C, vorzugsweise bei Temperaturen zwischen -30° C und +50° C.

Zur Durchführung des Herstellungsverfahrens setzt man pro Mol an bromsubstituiertem Amid der Formel (II) im allgemeinen 1.0 bis 3.0 Mol, insbesondere 1.0 bis 1.2 Mol an Oxim der Formel (III) und 1.0 bis 3.0 Mol, insbesondere 1.0 bis 2.0 Mol an Säurebindemittel ein.

In einer bevorzugten Durchführungsform stellt man die als Ausgangsstoffe verwendeten bromsubstituierten Amide der Formel (II) in einer vorgelagerten Reaktion direkt im Reaktionsgefäß her, indem man die entsprechenden Cyanmethylamide der Formel (IV),

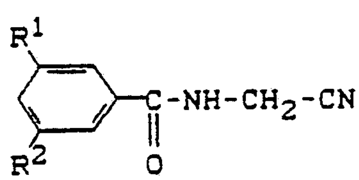
(IV)

in welcher
$R^1$ und $R^2$ die oben angegebene Bedeutung haben,
mit einem geeigneten Bromierungsmittel, wie beispielsweise mit elementarem Brom, in einem geeigneten

Verdünnungsmittel wie beispielsweise Essigsäure oder Essigester, und gegebenenfalls in Gegenwart eines geeigneten sauren Katalysators, wie beispielsweise Bromwasserstoffsäure, bei Temperaturen zwischen -20° C und + 20° C bromiert und direkt anschließend im 'Eintopfverfahren' umsetzt.

Die Reaktionsdurchführung, Aufarbeitung und Isolierung der Reaktionsprodukte der Formel (I) erfolgt in Analogie zu bekannten Methoden (vgl. EP 59 536).

Die erfindungsgemäß verwendbaren Wirkstoffe können als Defoliants, Desiccants, Krautabtötungsmittel und insbesondere als Unkrautvernichtungsmittel verwendet werden. Unter Unkraut im weitesten Sinne sind alle Pflanzen zu verstehen, die an Orten aufwachsen, wo sie unerwünscht sind. Ob die erfindungsgemäß verwendbaren Stoffe als totale oder selektive Herbizide wirken, hängt im wesentlichen von der angewendeten Menge ab.

Die erfindungsgemäß verwendbaren Wirkstoffe können z.B. bei den folgenden Pflanzen verwendet werden:

Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäß verwendbaren Wirkstoffe ist jedoch keineswegs auf diese Gattungen beschränkt, sondern erstreckt sich in gleicher Weise auch auf andere Pflanzen.

Die Verbindungen eignen sich in Abhängigkeit von der Konzentration zur Totalunkrautbekämpfung z.B. auf Industrie-und Gleisanlagen und auf Wegen und Plätzen mit und ohne Baumbewuchs. Ebenso können die Verbindungen zur Unkrautbekämpfung in Dauerkulturen, z.B. Forst, Ziergehölz-, Obst-, Wein-, Citrus-, Nuß-, Bananen-, Kaffee-, Tee-, Gummi-, Ölpalm-, Kakao-, Beerenfrucht-und Hopfenanlagen und zur selektiven Unkrautbekämpfung in einjährigen Kulturen eingesetzt werden.

Dabei lassen sich die erfindungsgemäß verwendbaren Wirkstoffe mit besonders gutem Erfolg zur Bekämpfung von monokotylen und dikotylen Unkräutern in monokotylen und dikotylen Kulturen wie beispielsweise Weizen oder Soja einsetzen.

Die Wirkstoffe können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder - schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

Z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier-und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate

sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo-und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäß verwendbaren Wirkstoffe können als solche oder in ihren Formulierungen auch in Mischung mit bekannten Herbiziden zur Unkrautbekämpfung Verwendung finden, wobei Fertigformulierungen oder Tankmischungen möglich sind.

Für die Mischungen kommen bekannte Herbizide wie z.B. 1-Amino-6-ethylthio-3-(2,2-dimethylpropyl)-1,3,5-triazin-2,4(1H,3H)-dion oder N-(2-Benzthiazolyl)-N,N′-dimethylharnstoff zur Unkrautbekämpfung in Getreide; 4-Amino-3-methyl-6-phenyl-1,2,4-triazin-5(4H)-on zur Unkrautbekämpfung in Zuckerrüben und 4-Amino-6-(1,1-dimethylethyl)-3-methylthio-1,2,4-triazin-5(4H)-on zur Unkrautbekämpfung in Sojabohnen, in Frage.

Auch Mischungen mit
Chloressigsäure-N-(methoxymethyl)-2,6-diethylanilid;
2-Chlor-4-ethylamino-6-isopropylamino-1,3,5-triazin;
5-Amino-4-chlor-2-phenyl-2,3-dihydro-3-oxy-pyridazin;
2-Chlor-N-{[(4-methoxy-6-methyl-1,3,5-triazin-2-yl)-amino]carbonyl}-benzolsulfonamid;
N,N-Dimethyl-N′-(3-chlor-4-methylphenyl)-harnstoff;
exo-1-Methyl-4-(1-methylethyl)-2-(2-methylphenyl-methoxy)-7-oxabicyclo(2,2,1)-heptan;
Ethyl-2-{[(4-chlor-6-methoxy-2-pyridinyl)-aminocarbonyl]aminosulfonyl}-benzoat;
2-Chlor-4-ethylamino-6-(3-cyanopropylamino)-1,3,5-triazin;
4-Amino-6-t-butyl-3-ethylthio-1,2,4-triazin-5(4H)-on;
N,N-Di-n-propyl-thiocarbamidsäure-S-ethylester;
N,N-Dimethyl-N′(3-trifluormethylphenyl)-harnstoff;
1-Methyl-3-phenyl-5-(3-trifluormethylphenyl)-4-pyridon;
2-[4-(3,5-Dichlorpyrid-2-yloxy)-phenoxy]-propionsäure-(trimethylsilylmethylester);
2,4-Dichlorphenoxyessigsäure;
2,4-Dichlorphenoxypropionsäure;
(4-Chlor-2-methylphenoxy)-propionsäure;
(2-Methyl-4-chlorphenoxy)-essigsäure;
Methyl-2-[4,5-dihydro-4-methyl-4-(1-methylethyl)-5-oxo-1H-imidazol-2-yl]-4(5)-methylbenzoat;
2-[5-Methyl-5-(1-methylethyl)-4-oxo-2-imidazolin-2-yl]-3-chinolincarbonsäure;
1-Isobutylaminocarbonyl-2-imidazolidinon;
N,N-Dimethyl-N′-(4-isopropylphenyl)-harnstoff;
3-Cyclohexyl-5,6-trimethylen-uracil;
(2-Ethoxy-1-methyl-2-oxo-ethyl)-5-[2-chlor-4-(trifluormethyl)-phenoxy]-2-nitrobenzoat;
N-Methyl-2-(1,3-benzthiazol-2-yloxy)-acetanilid;
2-Chlor-N-(2,6-dimethylphenyl)-N-[(1H)-pyrazol-1-yl-methyl]acetamid;
2-Ethyl-6-methyl-N-(1-methyl-2-methoxyethyl)chloracetanilid;
2-{[[((4-Methoxy-6-methyl-1,3,5-triazin-2-yl)-amino)-carbonyl]-amino]-sulfonyl}-benzoesäure oder deren Methylester;
N-(1-Ethylpropyl)-3,4-dimethyl-2,6-dinitroanilin;
α-Chlor-2′,6′-diethyl-N-(2-propoxyethyl)-acetanilid;
2-Chlor-4,6-bis-(ethylamino)-1,3,5-triazin und
Methyl-2-{[4,6-dimethyl-2-pyrimidinyl)-aminocarbonyl]aminosulfonyl}-benzoat sind möglich.
Einige Mischungen zeigen überraschenderweise auch synergistische Wirkung.

Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Die Wirkstoffe können als solche, in Form ihrer Formulierungen oder den daraus durch weiteres Verdünnen bereiteten Anwendungsformen, wie gebrauchsfertige Lösungen, Suspensionen, Emulsionen,

Pulver, Pasten und Granulate angewandt werden. Die Anwendung geschieht in üblicher Weise, z.B. durch Gießen, Spritzen, Sprühen, Streuen.

Die erfindungsgemäß verwendbaren Wirkstoffe können sowohl vor als auch nach dem Auflaufen der Pflanzen appliziert werden.

Sie können auch vor der Saat in den Boden eingearbeitet werden.

Die angewandte Wirkstoffmenge kann in einem größeren Bereich schwanken. Sie hängt im wesentlichen von der Art des gewünschten Effektes ab. Im allgemeinen liegen die Aufwandmengen zwischen 0,01 und 10 kg Wirkstoff pro Hektar Bodenfläche, vorzugsweise zwischen 0,05 und 5 kg pro ha.

Die Herstellung und die Verwendung der erfindungsgemäß verwendbaren Wirkstoffe geht aus den nachfolgenden Beispielen hervor.

## Herstellungsbeispiele

### Beispiel 1:

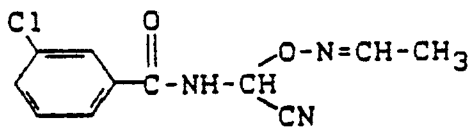

Zu 5,07 g (0.0261 Mol) 3-Chlorbenzoylamino-acetonitril in 250 ml absolutem Essigester gibt man bei 0° C einige Tropfen Brom und startet die Reaktion durch Zugabe einiger Tropfen einer 33%igen Lösung von Bromwasserstoff in Eisessig, wobei sich die Reaktionsmischung entfärbt. Anschließend gibt man ebenfalls bei 0° C das restliche Brom [insgesamt 4,2 g (0,0262 Mol)] langsam zu, kühlt nach beendeter Zugabe auf -25° C ab und gibt in einer Portion ein Gemisch aus 1,55 g (0.0262 Mol) Acetaldehydoxim und 5,3g (0,0523 Mol) Triethylamin in 50 ml absolutem Essigester zu, wobei sich die Reaktionsmischung auf -10° C erwärmt und Triethylaminhydrochlorid ausfällt. Man rührt 15 Minuten bei 0° C, filtriert, engt das Filtrat ein und reinigt den öligen Rückstand durch Chromatographie an Kieselgel (Laufmittel: Dichlormethan).

Man erhält 1,3 g (20 % der Theorie) an 2-(3-Chlorbenzoylamino)-2-ethylideniminoxy-acetonitril als E/Z-Gemisch vom Schmelzpunkt 92 °C.

In entsprechender Weise und gemäß den allgemeinen Angaben zur Herstellung erhält man die folgenden Alkoximinoalkylamide der allgemeinen Formel (I):

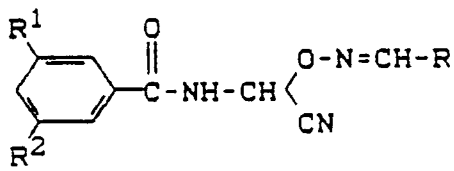

(I)

Tabelle 1

| Bsp. Nr. | R | $R^1$ | $R^2$ | physikalische Eigenschaften |
|---|---|---|---|---|
| 2 | H | H | Br | Fp 115 °C |
| 3 | $CH_3$ | H | Br | Fp 96 °C |
| 4 | H | H | F | Fp 127 °C |
| 5 | $CH_3$ | H | F | Fp 152 °C |
| 6 | $C_2H_5$ | H | Br | Fp 95 °C |
| 7 | $C_2H_5$ | H | F | $^1$H-NMR*): 3,8 |
| 8 | $CH_3$ | H | $CH_3$ | $^1$H-NMR*): 1,95 |
| 9 | $C_2H_5$ | H | Cl | Fp 83 °C |
| 10 | $C_2H_5$ | H | $CH_3$ | $^1$H-NMR*): 6,7 |
| 11 | $CH_3$ | Cl | Cl | Fp 162 - 164 °C |

Tabelle 1 (Fortsetzung)

| Bsp. Nr. | R | $R^1$ | $R^2$ | physikalische Eigenschaften |
|---|---|---|---|---|
| 12 | H | H | Cl | Fp 108 - 110° C |
| 13 | H | H | CN | Fp 146 - 148° C |
| 14 | $CH_3$ | H | CN | Fp 142 - 144° C |
| 15 | $(CH_3)_3C$- | H | CN | $^1$H-NMR*): 1,12 |
| 16 | H | H | $OCF_3$ | $^1$H-NMR*): 6,75 |
| 17 | $CH_3$ | H | $OCF_3$ | $^1$H-NMR*): 1,9 |
| 18 | $(CH_3)_3C$- | H | $OCF_3$ | $^1$H-NMR*): 1,1 |
| 19 | H | Cl | Cl | Fp 174 - 176° C |
| 20 | $(CH_3)_3C$- | Cl | Cl | $^1$H-NMR*): 1,12 |
| 21 | H | H | $NO_2$ | Fp 142° C |

Tabelle 1 (Fortsetzung)

| Bsp. Nr. | R | $R^1$ | $R^2$ | physikalische Eigenschaften |
|---|---|---|---|---|
| 22 | $CH_3$ | H | $NO_2$ | Fp 93° C |
| 23 | $(CH_3)_3C-$ | H | $NO_2$ | Fp 114 - 116° C |
| 24 | $CH_3$ | $CF_3$ | $CF_3$ | Fp 96 - 98° C |
| 25 | $CH_3$ | H | $SCF_3$ | Fp 67° C |
| 26 | H | H | $SCF_3$ | Fp 106 - 108° C |
| 27 | H | $CF_3$ | $CF_3$ | Fp 142 - 144° C |

*) Die ¹H-NMR-Spektren wurden in Deuterochloroform ($CDCl_3$) mit Tetramethylsilan (TMS) als innerem Standard aufgenommen. Angegeben ist die chemische Verschiebung als δ-Wert in ppm.

Formulierungsbeispiele

(Angabe in Gewichsprozent)

| Spritzpulver (Dispergierbares Pulver) | a) | b) | c) | d) | e) | f) |
|---|---|---|---|---|---|---|
| Wirkstoff gemäß Herstellungsbeispiel 4 | 10 | 20 | 35 | 50 | 65 | 85 |
| Dibutylnaphthalinsulfonat | 5 | 5 | 5 | 1 | 1 | 1 |
| Na-Ligninsulfat | 5 | 5 | 5 | 5 | 5 | 5 |
| hochdisperse Kieselsäure | 5 | 5 | 5 | 5 | 5 | 5 |
| natürliches Gesteinsmehl | 75 | 65 | 50 | 39 | 24 | 4 |

Der Wirkstoff wird mit den Zusatzstoffen gut vermischt und zu einem Pulver vermahlen. Vor der Anwendung wird das benetzbare Pulver mit soviel Wasser verrührt, daß die dabei entstehende Dispersion

den Wirkstoff in der jeweils gewünschten Konzentration enthält.

| Emulsionskonzentrat | a) | b) | c) |
|---|---|---|---|
| Wirkstoff gemäß Herstellungsbeispiel 11 | 5 | 15 | 25 |
| Xylol | 75 | 65 | 55 |
| Cyclohexanon | 10 | 10 | 10 |
| Ca-Dodecylbenzolsulfonat | 5 | 5 | 5 |
| Nonylphenolpolyglykolether | 5 | 5 | 5 |

Das durch das Vermisches des Wirkstoffes mit den Zusatzstoffen entstehende Emulsionskonzentrat wird mit soviel Wasser verdünnt, daß die dabei entstehende Mischung den Wirkstoff in der jeweils gewünschten Konzentration enthält.

| Granulat | a) | b) | c) | d) | e) |
|---|---|---|---|---|---|
| Wirkstoff gemäß Herstellungsbeispiel 11 | 1 | 3 | 7 | 15 | 20 |
| natürliches Gesteinsmehl | 10 | 10 | 10 | 5 | 5 |
| Sand (Körnung ca. 0,5-1,0 mm) | 88,3 | 86,2 | 82 | 78,5 | 73 |
| Polyvinylacetatlatex | 0,7 | 0,8 | 1 | 1,5 | 2 |

Der Wirkstoff wird mit dem Gesteinsmehl fein vermahlen. In einen Mischer legt man Sand vor, gibt Latex und anschließend die Wirkstoff-Mischung zu. Das Produkt wird mit Heißluft getrocknet.

Anwendungsbeispiele

In dem folgenden Anwendungsbeispiel wurde die nachstehend aufgeführte Verbindung als Vergleichssubstanz eingesetzt:

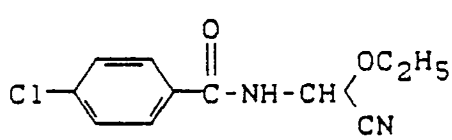

(A)

2-(4-Chlorbenzoylamino)-2-ethoxy-acetonitril (bekannt aus EP 59 536)

Beispiel A

Pre-emergence-Test
Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle. Es bedeuten:

0 % = keine Wirkung (wie unbehandelte Kontrolle)
100 % = totale Vernichtung

Eine deutliche Überlegenheit in der Wirksamkeit gegenüber der Vergleichssubstanz (A) zeigen in diesem Test z.B. die Verbindung gemäß folgender Herstellungsbeispiele: 4 und 11.

Tabelle A: Pre emergence-Test / Gewächshaus

| Wirkstoff | Wirkstoffaufwand g/ha | Soja | Weizen | Amaranthus | Polygonum | Portulak | Digitaria | Echinochloa | Panicum |
|---|---|---|---|---|---|---|---|---|---|
| (A) (bekannt) | 250 | 0 | 0 | 0 | 0 | 0 | 0 | 0 | 0 |
| (4) | 125 | 0 | 70 | 100 | 100 | 95 | 100 | 95 | 100 |
| (11) | 250 | 30 | 0 | 80 | 90 | 80 | 95 | 90 | 95 |

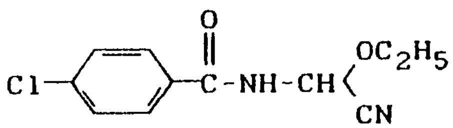
(A)

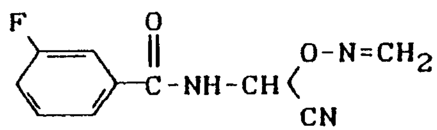
(4)

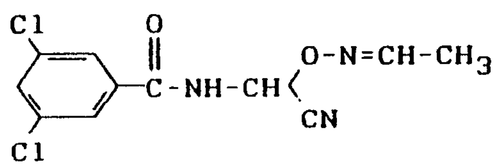
(11)

## Ansprüche

1. Herbizide Mittel, gekennzeichnet durch einen Gehalt an mindestens einem Alkoximinoalkylamid der Formel (I),

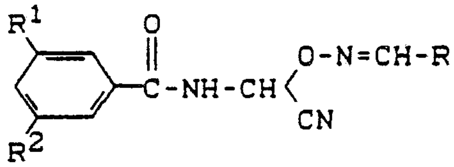

(I)

in welcher
R für Wasserstoff oder Alkyl steht,
$R^1$ für Wasserstoff, Halogen, Cyano, Nitro, Alkyl, Alkoxy, Alkylthio, Halogenalkyl, Halogenalkoxy, Halogenalkylthio, Phenyl, Phenoxy, Formyl, Alkoxycarbonyl, Alkanoyl oder Alkoximinoalkyl steht und
$R^2$ für Halogen, Cyano, Nitro, Alkyl, Alkoxy, Alkylthio, Halogenalkyl, Halogenalkoxy, Halogenalkylthio, Phenyl, Phenoxy, Formyl, Alkoxycarbonyl, Alkanoyl oder Alkoximinoalkyl steht.

2. Herbizide Mittel, gekennzeichnet durch einen Gehalt an mindestens einem Alkoximinoalkylamid der Formel (I) gemäß Anspruch 1, in welcher R für Wasserstoff oder für geradkettiges oder verzweigtes Alkyl mit 1 bis 4 Kohlenstoffatomen steht,
$R^1$ für Wasserstoff, Fluor, Chlor, Brom, Iod, Cyano, Nitro, für jeweils geradkettiges oder verzweigtes Alkyl, Alkoxy oder Alkylthio mit jeweils 1 bis 4 Kohlenstoffatomen, für jeweils geradkettiges oder verzweigtes Halogenalkyl, Halogenalkoxy oder Halogenalkylthio mit jeweils 1 bis 4 Kohlenstoffatomen und 1 bis 9 gleichen oder verschiedenen Halogenatomen, für Phenyl, Phenoxy, Formyl, für Alkanoyl mit 1 bis 5 Kohlenstoffatomen, für Alkoxycarbonyl mit 1 bis 5 Kohlenstoffatomen oder für Alkoximinoalkyl mit jeweils 1 bis 5 Kohlenstoffatomen in den einzelnen Alkylteilen steht und
$R^2$ für Fluor, Chlor, Brom, Iod, Cyano, Nitro, für jeweils geradkettiges oder verzweigtes Alkyl, Alkoxy oder Alkylthio mit jeweils 1 bis 4 Kohlenstoffatomen, für jeweils geradkettiges oder verzweigtes Halogenalkyl, Halogenalkoxy oder Halogenalkylthio mit jeweils 1 bis 4 Kohlenstoffatomen und 1 bis 9 gleichen oder verschiedenen Halogenatomen, für Phenyl, Phenoxy, Formyl, für Alkanoyl mit 1 bis 5 Kohlenstoffatomen, für Alkoxycarbonyl mit 1 bis 5 Kohlenstoffatomen oder für Alkoximinoalkyl mit jeweils 1 bis 5 Kohlenstoffatomen in den einzelnen Alkylteilen steht.

3. Herbizide Mittel, gekennzeichnet durch einen Gehalt an mindestens einem Alkoximinoalkylamid der Formel (I) gemäß Anspruch 1, in welcher
R für Wasserstoff, Methyl, Ethyl, n-oder i-Propyl oder t-Butyl steht,
$R^1$ für Wasserstoff, Fluor, Chlor, Brom, Iod, Cyano, Nitro, Methyl, Ethyl, n-oder i-Propyl, n-, i-, s-oder t-Butyl, Methoxy, Ethoxy, Methylthio, Trifluormethyl, Trifluormethoxy, Trifluormethylthio, Phenyl, Phenoxy, Formyl, Acetyl, Methoxycarbonyl, Ethoxycarbonyl, Methoximinomethyl, Methoximinoethyl oder Ethoximinomethyl steht und
$R^2$ für Fluor, Chlor, Brom, Iod, Cyano, Nitro, Methyl, Ethyl, n-oder i-Propyl, n-, i-, s-oder t-Butyl, Methoxy, Ethoxy, Methylthio, Trifluormethyl, Trifluormethoxy, Trifluormethylthio, Phenyl, Phenoxy, Formyl, Acetyl, Methoxycarbonyl, Ethoxycarbonyl, Methoximinomethyl, Methoximinoethyl und Ethoximinomethyl steht.

4. Herbizide Mittel, gekennzeichnet durch einem Gehalt an mindestens einem Alkoximinoalkylamid der Formel (I) gemäß Anspruch 1, in welcher
R für Wasserstoff, Methyl, Ethyl oder t-Butyl steht,
$R^1$ für Wasserstoff, Fluor, Chlor, Brom, Cyano, Nitro, Methyl, Ethyl, Methoxy, Trifluormethyl, Phenyl, Phenoxy, Methoxycarbonyl, Methoximinomethyl oder Methoximinoethyl steht und
$R^2$ für Fluor, Chlor, Brom, Cyano, Nitro, Methyl, Ethyl, Methoxy, Trifluormethyl, Trifluormethoxy, Trifluormethylthio, Phenyl, Phenoxy, Methoxycarbonyl, Methoximinomethyl oder Methoximinoethyl steht.

5. Verfahren zur Bekämpfung von Unkraut, dadurch gekennzeichnet, daß man Alkoximinoalkylamide der Formel (I) gemäß Anspruch 1 auf Unkraut und/oder deren Lebensraum einwirken läßt.

6. Verwendung von Alkoximinoalkylamiden der Formel (I) gemäß Anspruch 1 zur Bekämpfung von Unkraut.

7. Verfahren zur Herstellung von herbiziden Mitteln, dadurch gekennzeichnet, daß man Alkoximinoalkylamide der Formel (I) gemäß Anspruch 1 mit Streckmitteln und/oder oberflächenaktiven Substanzen vermischt.